# FASCICULE DE BREVET EUROPEEN

(11) **EP 2 190 594 B1**
(45) Date de publication et mention de la délivrance du brevet: **23.02.2011**
(21) Numéro de dépôt: 08829621.5
(22) Date de dépôt: 12.08.2008
(51) Int. Cl.: B07C 1/00, B07C 3/14, G06K 9/00, G06K 9/20, G06K 9/46

(54) **PROCÉDÉ DE TRAITEMENT D'ENVOIS POSTAUX AVEC DES CODES CLIENT ASSOCIÉS À DES EMPREINTES NUMÉRIQUES**
VERFAHREN ZUR VERARBEITUNG VON POSTPAKETEN MITTELS MIT DIGITALEN ABBILDERN VERBUNDENER KUNDENCODES
METHOD OF PROCESSING POSTAL PACKAGES WITH CLIENT CODES ASSOCIATED WITH DIGITAL IMPRINTS

(30) Priorité: 07.09.2007 FR 0757402
(43) Date de publication de la demande: 02.06.2010
(73) Titulaire: Solystic, 94257 Gentilly Cedex (FR)
(72) Inventeur: MIETTE, Emmanuel, F-95210 Saint Gratien (FR); LHOMME, Christophe, F-75014 Paris (FR)
(74) Mandataire: Prugneau, Philippe
(86) Numéro de dépôt international: PCT/FR2008/051491
(87) Numéro de publication internationale: WO 2009/030853

(56) Documents cités:
- FR-A- 2 807 348
- FR-A- 2 841 673

## Description

L'invention concerne un procédé de traitement d'envois postaux dans lequel des codes d'identification client sont attribués aux envois par un expéditeur des envois et dans lequel lors du passage des envois dans un système de tri postal d'un opérateur postal, on récupère sur chaque envoi courant un code d'identification client courant et on associe ce code d'identification client courant à des informations de localisation pour le suivi à distance de l'envoi courant dans le processus de tri.

Un tel procédé est déjà connu par le document de brevet FR-2807348. Ce procédé connu permet à un expéditeur d'envois en nombre (appelé encore « gros émetteur ou maileur ») d'obtenir de l'opérateur postal un service de suivi et localisation en temps réel des envois. L'utilisation de codes d'identification client (connus sous le nom de « Customer Applied Identifier ») permet encore d'améliorer du côté de l'expéditeur la fiabilité de sa base d'adresses des destinataires des envois. Du côté de l'opérateur postal, cela ce traduit par une réduction des coûts de distribution des envois du fait qu'il y a moins d'aléas et d'erreurs dans le tri automatique des envois.

Jusqu'à présent, ces codes d'identification client sont imprimés par l'expéditeur sur les envois sous la forme de code barres, notamment un code 128. L'impression du code d'identification client peut être réalisée par l'expéditeur par exemple en même temps que l'impression du bloc d'adresse destinataire sur l'enveloppe.

L'impression de ces codes à barres spécifiques pour le suivi des envois peut venir brouiller la lecture des informations d'adresse sur la surface des envois.

Le but de l'invention est d'apporter une solution à ces problèmes. A cet effet, l'invention a pour objet un procédé tel que défini plus haut, caractérisé en ce que lesdits codes d'identification client sont enregistrés en mémoire dans le système de tri en correspondance avec des premières empreintes numériques ou signatures d'image de la surface des envois préalablement au premier passage des envois dans le système de tri postal et en ce que lors du passage d'un envoi courant en première passe de tri dans le système de tri, on forme une image de la surface de l'envoi comportant un bloc d'adresse postale et on dérive de l'image de l'envoi une empreinte courante, on recherche une concordance entre cette empreinte courante et une empreinte enregistrée en mémoire pour récupérer par association le code d'identification client courant.

Avec le procédé selon l'invention, on s'affranchit donc de l'impression/ la lecture sur la surface des envois de codes d'identification client sous forme de codes à barres. La génération d'empreintes numériques pour des envois postaux est décrite dans le document de brevet français FR-2841673. Chaque empreinte numérique comprend une première composante dite « image » représentative de caractéristiques physiques de l'image numérique de l'envoi correspondant et une seconde composante dite « postale » indicative au moins d'une position spatiale des blocs d'information présents dans l'image de l'envoi. En particulier, la composante image est formée par des attributs dits « globaux » qui sont représentatifs de caractéristiques physiques globales prises sur l'ensemble des points de l'image numérique de l'envoi. La composante image est formée encore de seconds attributs dits « locaux » qui sont représentatifs de caractéristiques physiques locales prises sur des parties distinctes d'un quadrillage de l'image de l'envoi (ou de plusieurs quadrillages différents). En pratique, lors de la recherche de concordance entre une empreinte courante et une première empreinte candidate enregistrée en mémoire, on procède d'abord à une comparaison des composantes image respectives des empreintes puis après à une comparaison des composantes postales respectives des empreintes. On peut utiliser des mécanismes de réduction de l'espace d'exploration par prédiction de séquences d'envois pour détecter plus rapidement une concordance. Un tel mécanisme est par exemple décrit dans le document de brevet FR-2883493.

Le procédé de traitement d'envois selon l'invention peut présenter les particularités suivantes :
- lesdites premières empreintes sont générées dans le système de tri postal à partir d'images d'envois enregistrées en mémoire en correspondance avec lesdits codes d'indentification client
- lesdites premières empreintes sont générées à partir d'une image caractéristique des envois et d'informations d'adresse postale.

Un exemple de mise en oeuvre du procédé selon l'invention est décrit plus en détail ci-après et illustré par les dessins. Cette description n'est donnée qu'à titre d'exemple indicatif et nullement limitatif de l'invention.
La figure 1 illustre de façon très schématique la génération de la composante image d'une empreinte.
La figure 2 montre de façon schématique la génération de la composante postale d'une empreinte.
La figure 3 illustre très schématiquement le principe du procédé selon l'invention.
La figure 4 illustre très schématiquement une partie du procédé selon l'invention.
La figure 5 illustre très schématiquement par un organigramme le déroulement du procédé selon l'invention chez un opérateur postal.

Le procédé selon l'invention exploite des identifiants d'envois postaux sous la forme d'empreintes numériques. La construction d'une empreinte à partir d'une image de la surface d'un envoi et la recherche de concordance entre deux empreintes sont rappelées ci-après.

Selon l'invention, les envois postaux peuvent être des lettres, objets plats de petit ou grand format à enveloppe papier ou matière plastique, et autre article à trier en vue d'une distribution postale.

### Génération des empreintes numériques

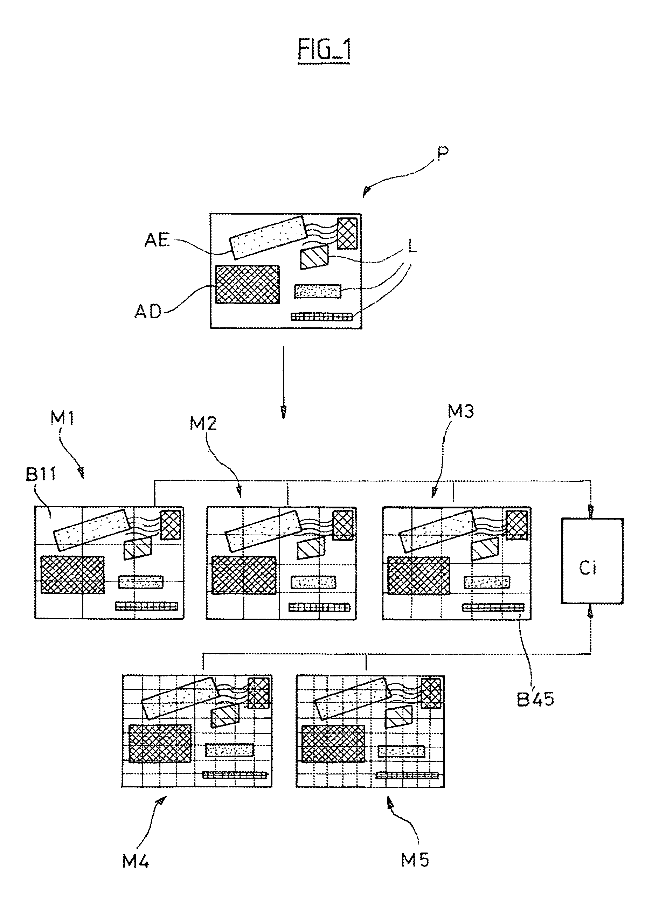

Sur la figure 1, on a illustré un envoi postal référencé P dont la surface comporte par exemple un premier bloc d'information AD qui correspond à l'adresse de distribution postale ou adresse de destination, un bloc d'information AE qui correspond à une adresse d'expéditeur et un bloc d'information L pouvant revêtir la forme d'un logo graphique qui correspond à d'autres informations textuelles supplémentaires telles qu'une flamme publicitaire imprimée par l'expéditeur.

Sur la base d'une image numérique en multi-niveaux de gris et basse résolution de cette surface de l'envoi, on génère une première composante dite « composante image » Ci de l'empreinte qui comprend des attributs dits globaux et des attributs dits locaux. Les attributs globaux sont plus particulièrement représentatifs de caractéristiques physiques globales de l'image telles que la hauteur et la largeur du pli postal, valeur de luminance moyenne des points de l'image numérique, écart-type, entropie des valeurs de luminance. Les attributs locaux sont plus particulièrement représentatifs de caractéristiques physiques locales de l'image prises sur des parties distinctes de l'image numérique.

Sur la figure 1, l'image numérique de l'envoi P est subdivisée en plusieurs parties distinctes B11, B'45 issues de différents quadrillages ou maillages M1,M2,M3,M4,M5 dans l'image numérique. Le quadrillage M1 définit ici 3x3 parties distinctes. Le quadrillage M5 définit 8x10 parties distinctes. Le nombre de parties distinctes dans un quadrillage et le nombre de quadrillages peuvent être un paramètre de l'analyse statistique appliquée à l'image numérique pour extraire la composante image Ci de l'empreinte. A partir de chaque partie telle que B11 et B'45 de l'image numérique issue d'un quadrillage tel que M1 ou M3, on peut extraire des attributs locaux tels que la valeur de luminance moyenne des points de cette partie de l'image numérique, écart-type, entropie des valeurs de luminance dans cette partie de l'image numérique. Ces attributs locaux contiennent une information d'autant plus discriminante que les envois postaux sont hétérogènes.

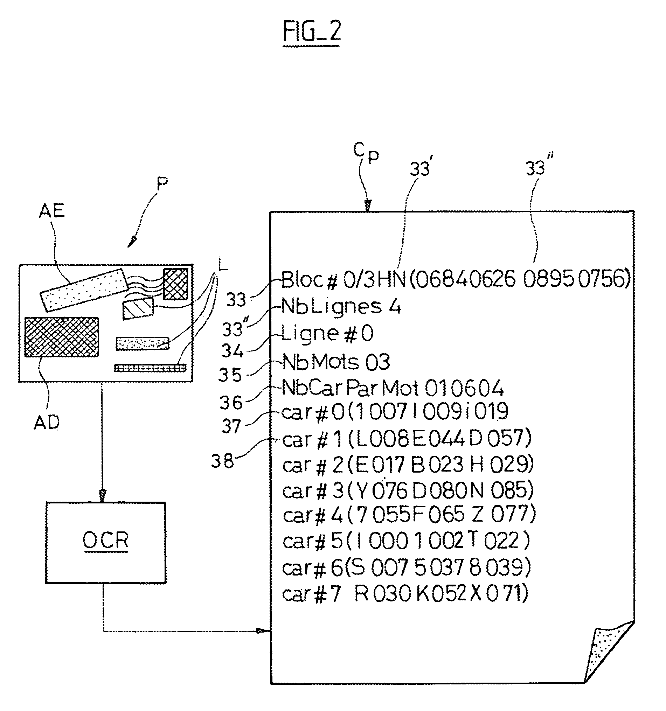

Sur la figure 2, on a illustré une seconde composante de l'empreinte dite « composante postale » Cp qui est indicative au moins de la position spatiale des blocs d'information tels que AD, AE et L dans l'image de l'envoi. Un système de reconnaissance optique de caractères OCR classiquement utilisé dans une machine de tri postal est capable de fournir des données indicatives de la position spatiale des blocs d'informations textuels détectés dans l'image numérique. Ces données indicatives de position spatiale peuvent être les coordonnées spatiales et d'orientation de la zone rectangulaire formant chaque bloc d'information. Un système OCR est apte également à fournir une description textuelle de chaque bloc d'information détecté dans l'image numérique. Une description textuelle d'un bloc d'information tel que AD par exemple peut consister dans l'indication du nombre de lignes de caractères détectées dans le bloc d'information, le nombre de mots détectés dans chaque ligne de caractères, le nombre de caractères détectés dans chaque mot de chaque ligne de caractères.

La figure 2 fournit un exemple de description textuelle du bloc d'information AD constituant la composante postale Cp de l'empreinte :
« BLOC#0/3 » désigné par 33, référence le bloc d'information 0 parmi les 3 blocs d'information détectés dans l'image numérique ;
« HN » désigné par 33', est une donnée indicative de l'orientation du bloc d'information 0 dans l'image numérique ;
« (0684 0626 0895 0756) » désigné par 33", sont des données représentatives des coordonnées spatiales du bloc d'information 0 dans l'image numérique ;
« NbLignes 4 » désigné par 33"', indique que le bloc d'information 0 comporte 4 lignes de caractères ;
« Ligne #0 » désigné par 34, référence la première ligne de caractères détectée dans le bloc d'information 0 ;
« NbMots 03 » désigné par 35, est une donnée indiquant que 3 mots ont été détectés dans la première ligne de caractères ;
« NbCarParMot 01 06 04 » désigné par 36, sont des données indiquant que les 3 mots de la première ligne de caractères comprennent respectivement 1, 6 et 4 caractères ;
« car #0 (1 007 I 009 i 019) » désigné par 37, sont des données indiquant que pour le premier caractère de la première ligne de caractères, l'OCR a identifié 3 caractères candidats respectivement 1, I et i avec des distances de ressemblance respectivement de 007, 009 et 019 ;
« car#1 (L 008 E 009 D 057) » désigné par 38, sont des données indiquant que pour le second caractère de la première ligne de caractères, l'OCR a identifié 3 caractères candidats respectivement L, E et D avec des distances de ressemblance respectivement de 008, 009 et 057 ;
... et ainsi de suite pour les autres caractères de la première ligne de caractères sachant qu'une valeur 0 pour la distance de ressemblance est la distance la plus faible, c'est-à-dire représente l'écart le plus faible par rapport au caractère idéal.

La construction d'une empreinte part donc de l'idée qu'une image numérique d'un envoi postal est un signal bidimensionnel interprétable dont le contenu peut être appréhendé tant au niveau physique qu'au niveau symbolique. De ce fait une empreinte est formée de deux composantes Ci et Cp complémentaires qui ne sont pas corrélées entre elles (indépendantes l'une de l'autre).

### Recherche de concordance entre deux empreintes

Pour comparer une empreinte courante à une empreinte candidate enregistrée dans une base de données, on compare la composante image Ci de l'empreinte courante avec la composante image Ci de l'empreinte candidate et on compare aussi la composante postale Cp de l'empreinte courante avec la composante postale Cp de l'empreinte candidate. Comme l'empreinte candidate fait partie d'un ensemble plus vaste d'empreintes, on fait préalablement des filtrages grossiers pour réduire l'espace d'exploration.

On peut commencer par la comparaison des attributs globaux respectifs des composantes image qui inclut un seuillage des valeurs absolues des variations sur chaque attribut global pour faire un premier filtrage parmi les empreintes candidates enregistrées dans la base. Ce filtrage permet d'éliminer les empreintes fortement dissemblantes de l'empreinte courante et de ne retenir qu'un faible nombre d'empreintes candidates pour la poursuite de la comparaison.

Puis on effectue ensuite sur ces empreintes candidates une comparaison des attributs locaux de la composante image ce qui peut encore réduire le nombre d'empreintes candidates dans la base. Cette comparaison peut être basée d'abord sur le calcul d'un coefficient de corrélation normalisé glissant entre les histogrammes correspondants dans l'empreinte courante et les empreintes candidates respectivement ce qui permet de s'affranchir des variations de luminance entre les deux images numériques comparées et ensuite sur le calcul d'un coefficient de corrélation normalisé, par type d'attribut, entre les autres attributs locaux dans l'empreinte courante et dans les empreintes candidates respectivement qui permet de s'affranchir des problèmes de normalisation dus à la différence de variabilité de chaque attribut local. Les empreintes candidates sont ensuite triées par ordre de ressemblance décroissant sur la base des coefficients de corrélation et un nombre fixé d'empreintes candidates les plus ressemblantes est retenu.

La comparaison des composantes postales Cp des empreintes peut ensuite commencer : on mesure la ressemblance des données indicatives de position des blocs d'information pour réduire encore le nombre d'empreintes candidates. Ces empreintes candidates peuvent ensuite être triées par ordre décroissant à partir d'une mesure de ressemblance des descriptions textuelles des blocs d'information. On détecte une concordance sur la base de la mesure de ressemblance la plus forte.

### Codes d'identification d'envoi clients - CAI

Selon l'invention, un expéditeur d'envois en nombre qui est client d'un opérateur postal attribue à chacun des envois un code d'identification CAI ce qui lui permet d'obtenir une sorte de traçabilité de ces envois chez l'opérateur postal.

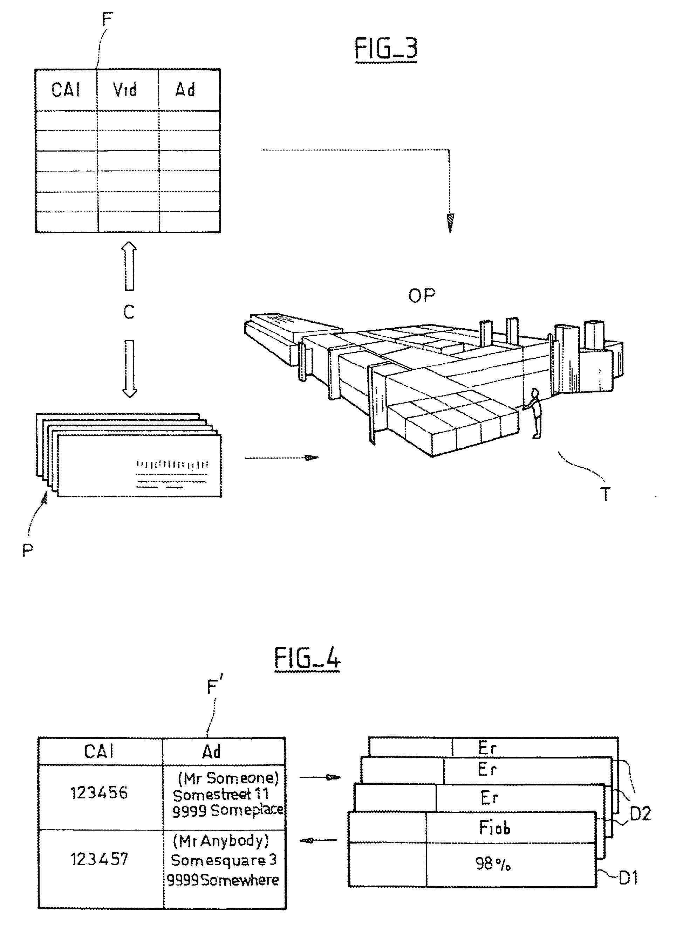

Sur la figure 3, on a illustré un fichier F constitué par l'expéditeur C avec des enregistrements comprenant chacun par exemple en correspondance un code d'identification d'envoi client CAI, une empreinte V-Id et des informations d'adresse Ad. Chaque enregistrement correspond donc à un envoi P du lot d'envois que l'expéditeur C va fournir à l'opérateur postal OP pour le tri/distribution. Il est entendu que l'expéditeur, pour constituer les empreintes numériques V-Id des envois, a formé préalablement avec une caméra une image de la surface de chaque envoi comportant le bloc d'adresse destinataire et a dérivé à partir de chaque image numérique une empreinte numérique comme expliqué plus haut. Chaque empreinte comporte une composante image et une composante postale.

Ce fichier F est envoyé par l'expéditeur C à l'opérateur postal OP en parallèle au lot d'envois P à distribuer. Le contenu de ce fichier F est chargé en mémoire dans la machine de tri postal T (la machine désignant ici un système de tri postal plus ou moins complexe et étendu). Les informations d'adresse Ad dans chaque enregistrement du fichier correspondent typiquement à l'adresse de distribution postale AD qui figure sur la surface d'un envoi.

L'exactitude de ces informations d'adresse Ad peut avoir été préalablement vérifiée par l'opérateur postal OP comme illustré sur la figure 4. Pour effectuer cette vérification, l'expéditeur C fournit à l'opérateur postal OP une liste F' d'adresses de distribution Ad en correspondance avec des codes d'identification client CAI. On a représenté dans F' des codes CAI par des numéros simples tels que 123456 et 123457 mais ces codes CAI peuvent être plus complexes et comporter en outre un code identifiant l'expéditeur et un code identifiant l'opérateur postal. On a représenté également des exemples d'adresses de distribution Ad. A l'issue de la vérification, l'opérateur postal OP peut retourner vers l'expéditeur C des données D1 indicatives par exemple de la fiabilité du fichier F' (à des fin de discussions commerciales) mais aussi des données D2 de mise à jour des adresses de distribution détenues par l'expéditeur. Ces mises à jour peuvent avoir lieu notamment suite à un ré-adressage sur une ou plusieurs adresses de distribution initiales. Cette phase de vérification et mise à jour des adresses de destinataires des envois chez l'expéditeur permet donc de supprimer ultérieurement (ou diminuer) les erreurs d'adressage au moment du tri postal des envois. Les échanges d'informations entre l'expéditeur C et l'opérateur postal OP peuvent se faire sous forme électronique à travers des réseaux de télécommunication.

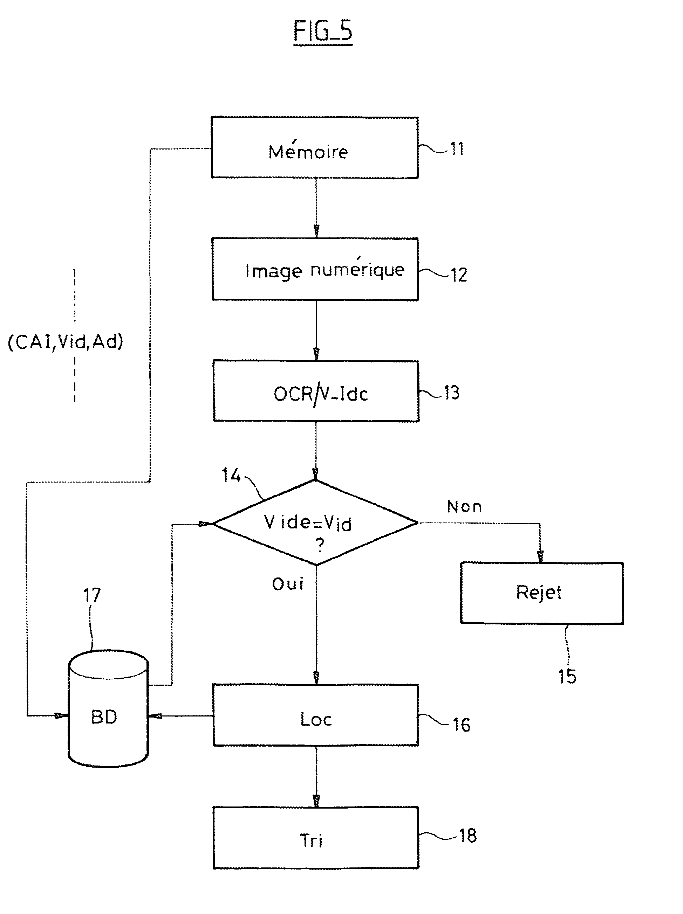

On a illustré maintenant par un organigramme sur la figure 5, la mise en oeuvre du procédé selon l'invention chez l'opérateur postal.

A l'étape 11, le fichier F est reçu chez l'opérateur postal OP et la liste de triplets (code d'identification client CAI, empreinte numérique V-Id, données d'adresse Ad) est enregistrée en mémoire du système de tri postal T dans une base de données 17. A chaque donnée d'adresse Ad correspond un code de tri (non représenté) désignant une sortie de tri dans la machine de tri T. Les codes de tri sont enregistrés en mémoire 17 en correspondance avec les codes d'identification client CAI.

A l'étape 12, un premier envoi P passe dans la machine de tri postal pour une première passe de tri et on forme avec une caméra une image numérique de sa surface comportant une information d'adresse (en particulier le bloc d'adresse de distribution). Cette caméra est celle qui sert dans une machine de tri conventionnelle à la reconnaissance automatique d'adresse postale par OCR.

A l'étape 13, on dérive de cette image une empreinte numérique courante V-Idc pour l'envoi courant. Cette empreinte ou signature d'image comprend une composante image et une composante postale comme indiqué plus haut.

A l'étape 14, on recherche une concordance entre cette empreinte courante V-Idc et les empreintes Vid enregistrées en mémoire 17 dans la machine de tri. Si on détecte une concordance à l'étape 14, on poursuit le processus à l'étape 16. Dans cette étape 16, on récupère dans la base de données 17 par association le code de tri associé à l'empreinte courante V-Idc et d'autre part le code d'identification client CAI associé à cette empreinte. On renseigne en mémoire 17 en correspondance avec ce code d'identification client CAI un champ d'informations de localisation : N° de centre de tri, N° de machine de tri, heure de passage de l'envoi courant en machine, etc.... Ces informations de localisation peuvent ensuite être consultées à distance par l'expéditeur.

A l'étape 18, l'envoi courant est dirigé vers une sortie de tri correspondant au code de tri récupéré à l'étape 16.

Si à l'étape 14, on n'a pas détecté de concordance, l'envoi est dirigé à l'étape 15 vers une sortie de rejet dans la machine de tri.

Les étapes 12 à 18 se répètent pour les envois successifs courants du lot d'envois de l'expéditeur.

En variante, à la place des empreintes Vid, l'expéditeur peut envoyer dans le fichier F les images de la surface des envois. A partir de ces images, l'opérateur postal génère d'abord à l'étape 11 les empreintes numériques V-Id pour les envois et les enregistre ensuite en mémoire 17 de la machine de tri postal T.

En variante supplémentaire, à la place des empreintes V-Id, l'expéditeur peut envoyer dans le fichier F une seule image caractéristique de la surface des envois. A partir de cette image caractéristique et des informations d'adresse Ad (le cas échéant de polices de caractères utilisées pour les informations d'adresse), l'opérateur postal génère d'abord à l'étape 11 les empreintes numériques V-Id pour les envois et les enregistre ensuite en mémoire 17 dans la machine de tri postal T.

Dans le premier mode de mise en oeuvre du procédé, c'est l'expéditeur qui génère les empreintes associées respectivement aux codes d'identification client. Dans les variantes du procédé selon l'invention, c'est l'opérateur postal qui génère ces empreintes.

Avec le procédé selon l'invention, pour fournir un service de traçabilité aux expéditeurs d'envois en nombre, un opérateur postal n'a plus besoin de relire des codes barres d'identification client sur les envois en nombre. Ceci contribue pour l'opérateur postal à l'obtention d'une réduction du coût de fonctionnement de ces équipements de tri dans lesquels sont traités les envois en nombre.

## Revendications

1. Procédé de traitement d'envois postaux (P) dans lequel des codes d'identification client (CAI) sont attribués aux envois par un expéditeur des envois et dans lequel lors du passage des envois dans un système de tri postal (T) d'un opérateur postal, on récupère sur chaque envoi courant un code d'identification client courant et on associe ce code d'identification client courant à des informations de localisation pour le suivi à distance de l'envoi courant dans le processus de tri, **caractérisé en ce que** lesdits codes d'identification client sont enregistrés en mémoire (11) dans le système de tri en correspondance avec des premières empreintes numériques (V-Id) ou signatures d'image de la surface des envois préalablement au premier passage des envois dans le système de tri postal et **en ce que** lors du passage d'un envoi courant en première passe de tri dans le système de tri, on forme (12) une image de la surface de l'envoi comportant un bloc d'adresse postale et on dérive (13) de l'image de l'envoi une empreinte courante, on recherche une concordance (14) entre cette empreinte courante et une première empreinte enregistrée en mémoire pour récupérer le code d'identification client courant.

2. Procédé selon la revendication 1, dans lequel lesdites premières empreintes ou signatures d'image sont générées dans le système de tri postal à partir d'images d'envois enregistrées en mémoire en correspondance avec lesdits codes d'identification client.

3. Procédé selon la revendication 1, dans lequel lesdites premières empreintes ou signatures d'images sont générées à partir d'une image caractéristique des envois et d'informations d'adresse postale.

## Claims

1. A method of processing mailpieces (P), in which method Customer Applied Identifier (CAI) codes are assigned to the mailpieces by a sender of the mailpieces, and, while the mailpieces are passing through a postal operator's postal sorting system (T), a current CAI code is retrieved from each current mailpiece, and said current CAI code is associated with location information for remotely tracking the current mailpiece in the sorting process, said method being **characterized in that** said CAI codes are recorded in memory (11) in the sorting system in correspondence with first digital fingerprints (V_Id) or image signatures of the surfaces of the mailpieces prior to the first pass of the mailpieces through the postal sorting system, and **in that**, while a current mailpiece is passing through the sorting system in a first sorting pass, an image is formed (12) of the surface of the mailpiece that bears a postal address block, a current fingerprint is derived (13) from the image, and a search is made for a match (14) between said current fingerprint and a first fingerprint recorded in memory in order to retrieve the current CAI code.

2. A method according to claim 1, in which said first fingerprints or image signatures are generated in the postal sorting system on the basis of mailpiece images recorded in memory in correspondence with said CAI codes.

3. A method according to claim 1, in which said first fingerprints or image signatures are generated on the basis of an image that is characteristic of the mailpieces and on the basis of postal address information.

## Patentansprüche

1. Verfahren zur Verarbeitung postalischer Sendungen (P), bei dem Kundenidentifikationscodes (CAI) den Sendungen durch einen Absender der Sendung zugeordnet werden, und bei dem bei einem Durchlauf der Sendungen in einem postalischen Sortiersystem (T) eines Postbetreibers bei jeder laufenden Sendung ein laufender Kundenidentifikationscode erfasst wird und dieser laufende Kundenidentifikationscode mit Lokalisierungsinformationen für das auf Entfernung Verfolgen der laufenden Sendung in dem Sortiervorgang verknüpft wird,
**dadurch gekennzeichnet,**
**dass** die Kundenidentifikationscodes in einem Speicher (11) in dem Sortiersystem korrespondierend mit ersten digitalen Abdrücken (V-Id) oder Bildsignaturen der Oberfläche der Sendungen, die zuvor bei einem ersten Durchlauf der Sendungen in dem postalischen Sortiersystem gebildet wurden, gespeichert werden, und dass bei einem Durchlauf der laufenden Sendung bei einem ersten Sortierdurchgang in dem Sortiersystem ein Bild der einen postalischen Adressblock umfassenden Oberfläche der Sendung gebildet wird (12), und aus dem Sendungsbild ein laufender Abdruck abgeleitet wird (13), wobei eine Konkordanz zwischen dem laufenden Abdruck und einem in dem Speicher abgelegten ersten Abdruck gesucht wird (14), um den laufenden Kundenidentifikationscode zu erfassen.

2. Verfahren nach Anspruch 1, bei dem die ersten Abdrücke oder Bildsignaturen in dem postalischen Sortiersystem generiert werden ausgehend von in einem Speicher korrespondierend mit den Kundenidentifikationscodes gespeicherten Sendungsbildern.

3. Verfahren nach Anspruch 1, bei dem die ersten Abdrücke oder Bildsignaturen generiert werden ausgehend von einem charakteristischen Bild der Sendungen und von postalischen Adressinformationen.
